# EUROPEAN PATENT APPLICATION

(11) **EP 2 045 710 A2**
(43) Date of publication of application: **08.04.2009**
(21) Application number: 08165772.8
(22) Date of filing: 02.10.2008
(51) Int. Cl.: G06F 3/06

(54) **Methods for implementation of an archiving system which uses removable disk storage system**

(30) Priority: 05.10.2007 US 977746 P; 27.08.2008 US 199398
(71) Applicant: ProStor Systems, Inc., Boulder, CO 80301 (US)
(72) Inventor: Bondurant, Matthew D., Superior, Colorado 80027 (US); Alaimo, S. Christopher, Boulder, Colorado 80302 (US); Kerns, Randy, Boulder, Colorado 80301 (US)
(74) Representative: McCall, John Douglas

(57) **Abstract**

According to the disclosure, embodiments of archival storage system are disclosed. The archival storage system includes two or more removable disk drives that provide random access and are readily expandable. One or more application servers can store archival data to the one or more removable disk drives. Further, the archival storage system provides intelligent archiving by adapting storage requirements to the type of data being archived by the application servers. Methods for storing archival data are also provided that store archival information in removable disk drives.

## Description

### CROSS-REFERENCES TO RELATED APPLICATIONS

This application claims priority to inter alia U.S. Provisional Patent Application Serial No. 60/977,746, filed October 5, 2007, entitled " METHODS FOR IMPLEMENTATION OF AN ARCHIVING SYSTEM WHICH USES REMOVABLE DISK STORAGE SYSTEM", which is hereby incorporated herein in its entirety.

### BACKGROUND

This disclosure relates, in general, to storage systems and, more specifically, but not by way of limitation, to archiving storage systems.

An archiving storage system is used by one or more applications or application servers to store data for longer periods of time, for example, one year. Governments and other organizations often require the storage of certain types of data for long periods. For example, the Securities and Exchange Commission (SEC) may require retention of financial records for three or more months. Thus, entities that have to meet these storage requirements employ archiving systems to store the data to a media allowing for long-term storage. However, at present, current archiving systems suffer from inadequacies.

Some currently-available archiving systems employ media, such as fixed disks, that cannot be easily replaced once the media has reached full capacity. Further, these archiving systems generally do not offer easy methods for increasing storage capacity and require users to buy additional systems. As requirements for additional storage increase, the archiving systems generally must be duplicated to meet the additional demands. The duplication of currently-owned systems becomes increasingly expensive and inefficient.

Further, some archiving systems use media that cannot be reused. Some types of media do not allow the user to overwrite or reuse the media after it has been written to. In some circumstances, the government or other organizations require that the media be destroyed to ensure that the data on the media is inaccessible. As the data on the media needs to be destroyed, the media is physically damaged as to be unusable. Thus, the media needs to be replaced when the data is destroyed, creating additional expense.

Still other archiving systems require the data to be written to the media in a certain format, for example, sequentially-written. In attempting to read the data from the archival media, the data is not as readily accessible because the data cannot be read randomly. Rather, the media needs to be read sequentially until the desired data is found and can be read. This process slows the access time for retrieval of the data.

It is in view of these and other considerations not mentioned herein that the embodiments of the present disclosure were envisioned.

### BRIEF DESCRIPTION OF THE DRAWINGS

The present disclosure is described in conjunction with the appended figures:

Fig. 1 is a block diagram of an embodiment of a removable cartridge storage system;

Fig. 2 is a hardware block diagram of an embodiment of an archiving system including one or more removable cartridge storage systems;

Fig. 3 is a functional block diagram of an embodiment of an archiving system;

Fig. 4 is a block diagram of embodiments of an archival management system and an archiving system;

Fig. 5 is a flow diagram of an embodiment of a process for storing archival data in one or more removable disk drives;

Fig. 6 is a flow diagram of an embodiment of a process for retrieving archival data from one or more removable disk drives.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DESCRIPTION OF EMBODIMENTS

The ensuing description provides exemplary embodiment(s) only, and is not intended to limit the scope, applicability or configuration of the disclosure. Rather, the ensuing description of the exemplary embodiment(s) will provide those skilled in the art with an enabling description for implementing exemplary embodiments of the disclosure. It being understood that various changes may be made in the function and arrangement of elements without departing from the spirit and scope of the disclosure as set forth in the appended claims.

Specific details are given in the following description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine-readable-medium such as storage medium. A processor(s) may perform the necessary tasks. A code segment may represent a procedure, a function, a subprogram, a program, a routine, a subroutine, a module, an object, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc., may be passed, forwarded, or transmitted via any suitable means including memory sharing, message passing, token passing, network transmission, etc.

Embodiments of the present disclosure provide a unique and novel hardware architecture for archiving data. Embodiments include an archiving system having disk drives embedded in removable cartridges. The removable disk drives allow for expandability and replacement such that the archiving system need not be duplicated to add new or more storage capacity. Further, the removable disk drives provide advantages in speed and data access because, in embodiments, the data is stored and retrieved by random access rather than sequential access. These and further advantages will be evident to one skilled in the art from a review of the detailed description provided herein.

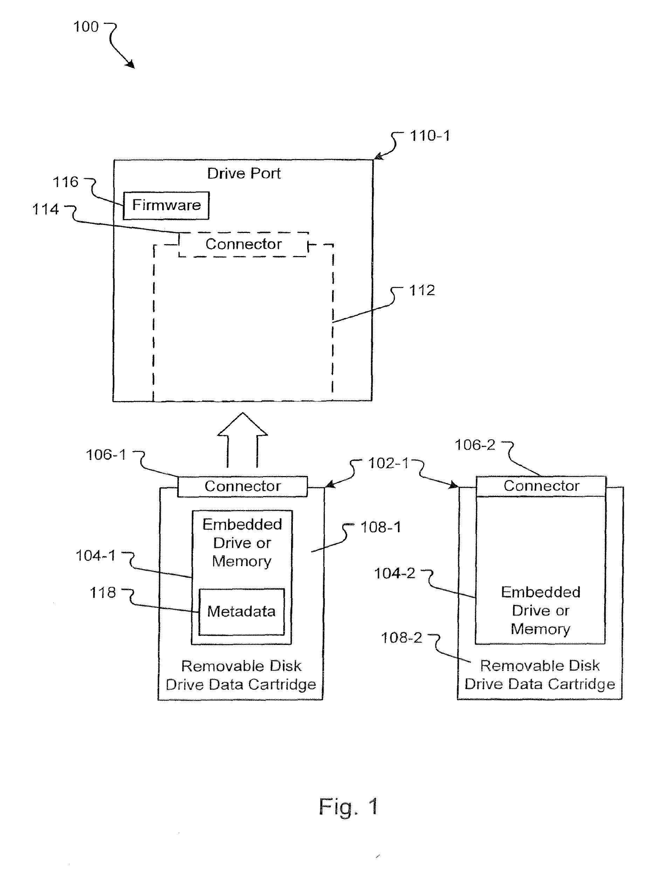

An embodiment of a removable disk system 100 to provide long-term archival data storage is shown in Fig. 1. A removable disk drive 102-1 provides storage capability for the removable disk system 100. In embodiments, the removable disk drive 102-1 includes a data cartridge case 108 and an embedded memory 104, which may be an embedded hard disk drive (HDD), flash memory, a solid state disk (SSD), or a solid state drive. The HDD or flash memory provides a random-access memory for storage of archived data. The embedded memory is in communication with and/or electrically connected to a connector 106. In one embodiment, the connector 106 is a Serial Advanced Technology Attachment (SATA) connector. In other embodiments, the connector 106 is a Universal Serial Bus connector, parallel connector, Firewire connector, or other connector. Both the embedded memory 104-1 and connector 106-1 are, in embodiments, physically attached to the data cartridge case 108-1, and, in some embodiments, enclosed by, protected by, physically connected or integrated into the data cartridge case 108-1. In other embodiments, embedded memory 104-2 is physically integrated with the connector 106-2 in a single physical structure, with the connector 106-2 protruding from the data cartridge case 108-2

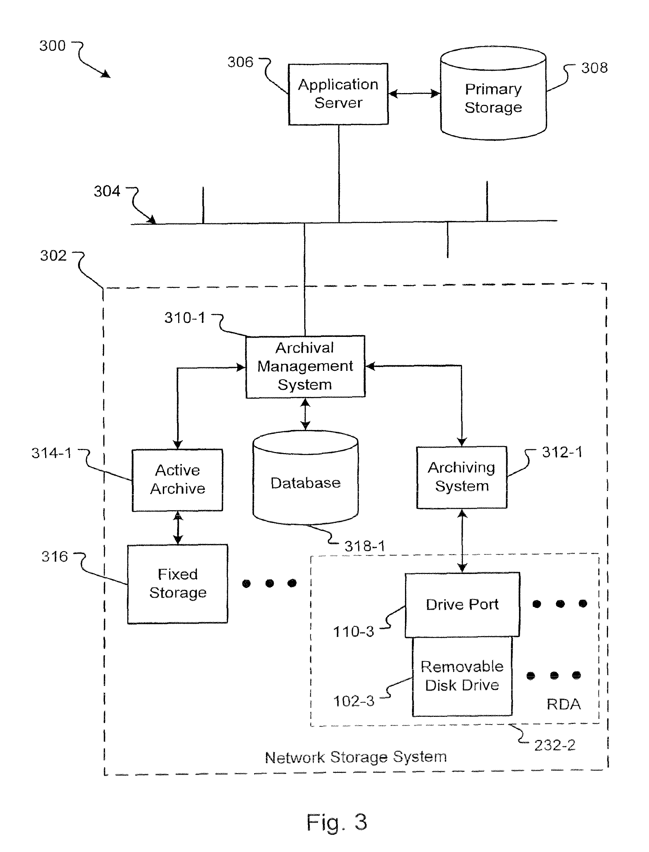

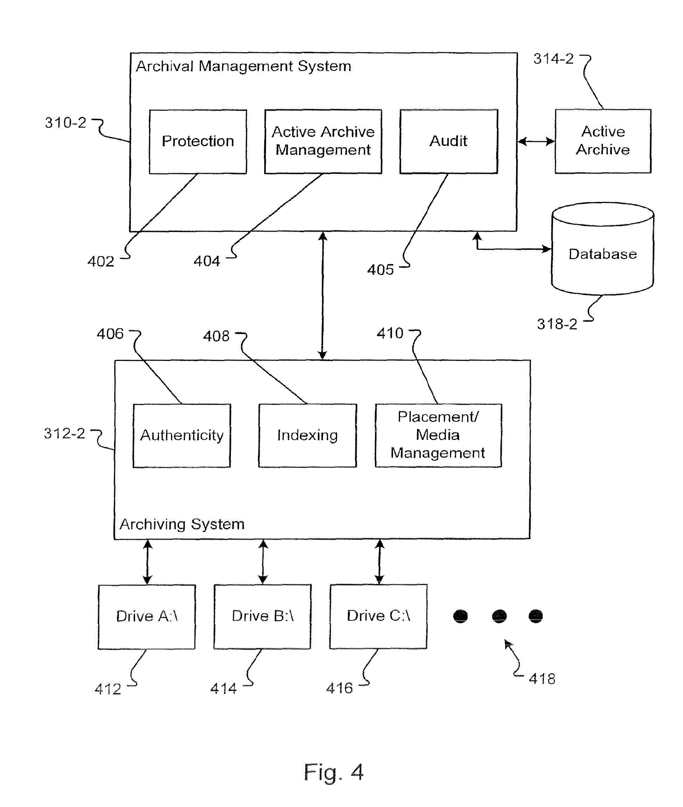

In embodiments, the archiving system 100 contains a drive port 110-1 that includes one or more docking ports or cartridge holders 112, each with a data cartridge connector 114 to receive the removable disk drive 102-1. The data cartridge connector 114 mates with the electrical connector 106 of the removable disk drive 102-1 to provide electrical power to the removable disk drive 102-1 and/or to communicate with the embedded memory 104 in the removable disk drive 102-1. As with the connector 106, the data cartridge connector 114 may be a SATA connector or another type of connector. Regardless, the data cartridge connector 114 and the electrical connector 106 can be connected. The docking port 112 allows the removable disk drive 102-1 to be easily inserted and removed as necessary. In embodiments, the drive port 110-1 1 includes two or more drive ports 112 to allow for the use, control and communication with two or more 0-1 removable disk drives 102-1. Each docking port 112, in embodiments, is separately addressable to allow for customized control over each removable disk drive 102-1 connected to each docking port 112. Thus, as removable disk drives 102-1 are replaced, the same configuration can be applied to the newly inserted removable disk drive 102-1 because the drive port 110-1 is addressed instead of the removable disk drive 102-1. More description regarding customizable control is provided in conjunction with Fig. 3 and Fig. 4.

The embedded memory 104, in embodiments, includes metadata 118 stored thereon. The metadata 118 can comprise one or more of, but is not limited to, cartridge and/or HDD identification, encryption keys or data, other security information, information regarding data stored on the HDD, information about the data format used for the HDD, etc. The metadata 118 may be read and used by the firmware 116 of the drive port 110-1. The firmware 116 may be hardware and/or software resident in the drive port 110-1 for controlling the removable disk drive 102-1. In embodiments, the firmware 116 contains the necessary software and/or hardware to power-up the removable disk drive 102-1, spin-up the disk platters in the embedded memory 104, read and write to the embedded memory 104, read, write and process the metadata 118, etc. For example, the firmware 116 could read the metadata 118 to identify the removable disk drive 102-1 and gather information related to its contents.

In embodiments, the archiving system 100 operates to receive one or more removable disk drives 102-1 in one or more docking ports 112. The electrical connector 106 connects or couples with the data cartridge connector 114 to form an electrical connection that allows the drive port 110-1 to communicate with the embedded memory 104. The firmware 116 powers-up the embedded memory 104 and begins any initialization processes (e.g., security processes, identification processes, reading and/or writing to the metadata 118, etc.). The drive port 110-1, which, in embodiments, is in communication with a network, receives data from one or more servers, applications, or other systems on the network. The firmware 116 writes the data to the embedded memory 104 of the removable disk drive 102-1 to archive the data.

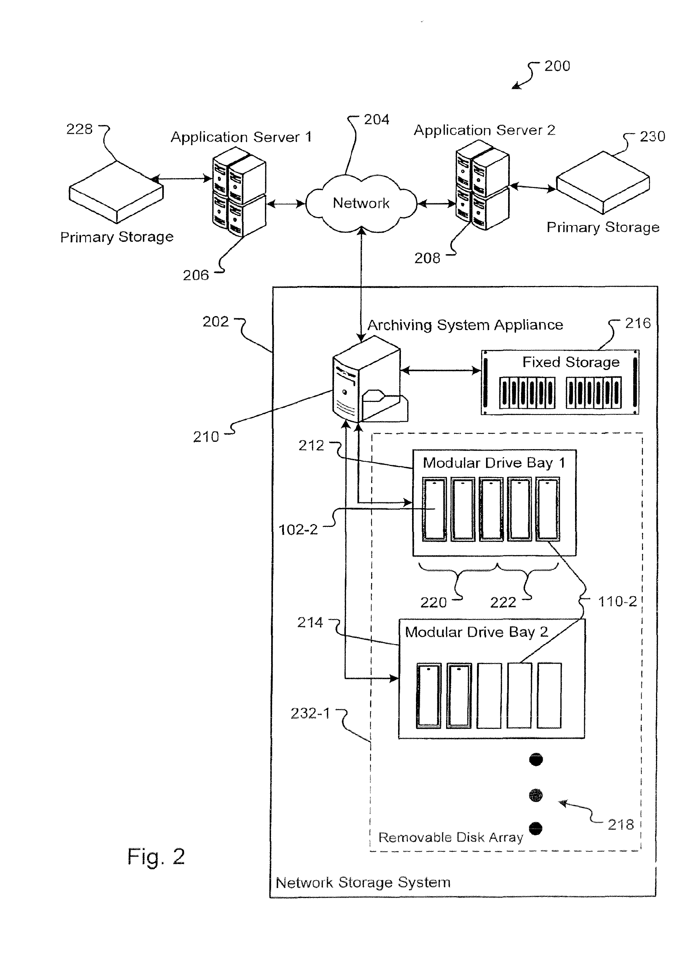

An embodiment of the hardware architecture of an archiving system 200 is shown in Fig. 2. The archiving system 200, in embodiments, comprises a network storage system 202 in communication with one or more systems via a network 204. In embodiments, the systems that communicate with the network storage system 202 comprise applications, application servers, other servers, peripherals, other devices, and other systems that archive data on the network storage system 202. For example, application server 1 206 and/or application server 2 208 store archival data on the network storage system 202. An application server 206 or 208 may be an application, peripheral device, system, network component, or other software function or hardware device that may store archived data.
Hereinafter, all functions, systems, processes, hardware devices that may store archived data will be referred to as an application or application server.
Application server 1 206 and application server 2 208 will hereinafter be used to describe the functions of the archiving system 200 but are not meant to limit the description to the exemplary embodiments set forth herein.

The network storage system 202 comprises one or more components that may be encompassed in a single physical structure or be comprised of discrete components. In embodiments, the network storage system 202 includes an archiving system appliance 210 and one or more removable disk drives 102-2 connected or in communication with a drive port 110-2. In alternative embodiments, a modular drive bay 212 and/or 214 includes two or more drive ports 110-2 that can each connect with a removable disk drive 102-2. Thus, the modular drive bays 212 and 214 provide added storage capacity because more than one removable disk drive 102-2 can be inserted and accessed using the same archiving system appliance 210. Further, each drive port 110-2 in the modular drive bays 212 and 214 is, in embodiments, separately addressable allowing the archiving system appliance 210 to configure the removable disk drives 102-2 in the modular drive bays 212 and 214 into groups of one or more removable disk drives 102-2. Two or more modular drive bays 212 and 214, in embodiments, are included in the network storage system 202, as evidenced by the ellipses 218. Thus, as more data storage capacity is required, more modular drive bays may be added to the network storage system 202.

The exemplary hardware architecture in Fig. 2 provides near limitless capacity as more removable disk drives 102-2 can be added to existing modular drive bays 212 or 214 until the modular drive bays 212 and 214 hold all possible removable disk drives 102-2, then more modular drive bays are added to the network storage system 202. Further, removable disk drives 102-2 may be replaced as the removable disk drives 102-2 near their storage capacity. The removed disk drives 102-2, in embodiments, are physically stored if and until the data on the removable disk drives 102-2 needs to be retrieved. If the data on the removable disk drive 102-2 needs to be retrieved, the removable disk drive 102-2 may be inserted into one of the drive ports 110-2 of a modular drive bay 212 or 214, and the information retrieved from the connected removable disk drive 102-2.

The archiving system appliance 210, in embodiments, is a server operating as a file system. The archiving system appliance 210 may be any type of computing system having a processor and memory and operable to complete the functions described herein. An example of a server that may be used in the embodiments described herein is the PowerEdge™ 2950 Server offered by Dell Incorporated of Austin, Texas. The file system executing on the server may be any type of file system, such as the NT File System (NTFS), that can complete the functions described herein.

The archiving system appliance 210, in embodiments, is a closed system that only allows access, to the network storage system 202, by applications or other systems and excludes access by users. Thus, the archiving system appliance 210 provides protection to the network storage system 202.

In embodiments, the two or more modular drive bays 212 and 214, having each one or more inserted removable disk drives 102-2, form a removable disk array (RDA) 232-1. The archiving system appliance 210 can configure the RDA 232-1 into one or more independent file systems. Each application server 206 or 208, requiring archiving of data, may be provided a view of the RDA 232-1 as one or more independent file systems. In embodiments, the archiving system appliance 210 logically partitions the RDA 232-1 and logically associates one or more removable disk drives 102-2 with each logical partition. Thus, the one or more removable disk drives 102-2 comprising the logical partition appear as an independent file system. For example, the archiving system appliance 210 creates a first logical drive, e.g., drive "A:\", and a second logical drive, e.g., drive "B:\".
The logical drives may comprise one or more removable disk drives 102-2. For example, the three removable disk drives represented by bracket 220 correspond to the first logical drive while the two removable disk drives represented by bracket 222 correspond to the second logical drive. As such, the amount of capacity for each logical drive can be configured depending on the number of removable disk drives 102-2 included as part of the logical drive. Further, each logical drive, in embodiments, has a set of rules or characteristics specific to the drive. For example, if the drive stores a certain type of information that requires the data to be eliminated every year, the data on the logical drive may be eliminated once a year. In embodiments, a user may configure how the logical partitions are created and the storage requirements for each logical partition. This customization of the RDA 232-1 is a novel enhancement over existing archiving systems.

In further embodiments, the archiving system appliance 210 provides an interface for application server 1 206 and application server 2 208 that allows the application servers 206 and 208 to communicate archival data to the network storage system 202. The archiving system appliance 210, in embodiments, determines where and how to store the data in a removable disk drive 102-2. For example, the application server 1 206 stores archival data in a first logical drive, such as, the first three removable disk drives 220. The logical drives are, in embodiments, presented to the application servers 206 and 208 as logical drives where write and read permissions for any one logical drive is specific to one of the application servers. As such, the network storage system 202 provides a multiple and independent file system to each application server 206 and 208 using the same hardware architecture.

In alternative embodiments, the network storage system 202 also comprises a fixed storage 216. The fixed storage 216 may be any type of memory or storage media either internal to the archiving system appliance 210 or configured as a discrete system. For example, the fixed storage 216 can be a Redundant Array of Independent Disks (RAID), such as the Xtore XJ-SA12-316R-B from AIC of Taiwan. The fixed storage 216 provides for storing certain archival data for a shorter period of time where the data may be more easily accessed. In embodiments, the archiving system appliance 210 copies archival data to both the fixed storage 216 and the RDA 232-1. If the data is needed in the short term, the archiving system appliance 210 retrieves the data from the fixed storage 216.

In operation, application server 1 206 stores data into a primary storage 228, which may be a local disk drive or other memory. After some predetermined event, the application server 1 206 reads data from the primary storage 228, packages the data in a format for transport over the network 204 and sends the data to the network storage system 202 to be archived. The archiving system appliance 210 receives the archival data and determines where the data should be stored. The data is then sent to the fixed storage 216 and/or one or more of the removable disk drives 102-2 in one or more of the drive ports 110-2. The data is written to the removable disk drive 102-2 for long-term storage. In further embodiments, application server 2 208 also writes data to a primary storage 230 and sends data to the network storage system 202. In some embodiments, the archival data from application server 2 208 is stored to a different removable disk drive 102-2 because the archival data relates to a different application.

A block diagram of an archiving system 300 is shown in Fig. 3. The archiving system 300 has one or more functional components that, in embodiments, includes a network storage system 302 in communication with a network 304. The network 304 may be any type of communication infrastructure, for example, one or more of, but not limited to, a wide-area network (WAN), local area network (LAN), wireless LAN, the Internet, etc. The network storage system 302 may communicate with one or more other systems coupled or connected to the network. For example, the network storage system 302 communicates with an application server 306. Communications between systems on the network 304 may occur by any protocol or format, for example, Transmission Control Protocol/Internet Protocol (TCP/IP), Hyper Text Transfer Protocol (HTTP), etc.

The network storage system 302, in embodiments, comprises one or more functional components embodied in hardware and/or software. In one embodiment, the network storage system 302 comprises an archiving system 312-1 in communication with one or more drive ports 110-3 that are in communication with one or more removable disk drives 102-3. The drive port 110-3 and removable disk drives 102-3 are similar in function to those described in conjunction with Fig. 1. The archiving system 312-1 controls the function of the one or more drive ports 110-3 and reads or writes the archived data to one or more predetermined removable disk drives 102-3 in the one or more drive ports 110-3.

In further embodiments, the network storage system 302 comprises an archival management system 310-1. The archival management system 310-1, in embodiments, receives data for archiving from one or more systems on the network 304. Further, the archival management system 310-1 may determine to which system or removable disk drive the data should be archived, in which format the data should be saved and can provide security for the network storage system 302. In embodiments, the archival management system 310-1 provides a logically partitioned archive such that the network storage system 302 appears to be an independent file system to the application server 306, yet maintains the archive for multiple application servers. Thus, the archival management system 310-1 manages the network storage system 302 as multiple, independent file systems for one or more application servers 306. In embodiments, the archival management system 310-1 and the archiving system 312-1 are functional components of the archiving system appliance 210 (Fig. 2).

In embodiments, the archival management system 310-1 saves archived data to both the archiving system 312-1 and an active archive 314-1. The active archive 314-1, in embodiments, controls, reads from and writes to one or more fixed storage devices 316 that allow easier access to archived data. In embodiments, fixed storage 316 is similar in function to fixed storage 216 (Fig. 2). The active archive 314-1 performs similar functions to the archiving system 312-1 but for the fixed storage devices 316. In embodiments, the active archive 314-1 and the fixed storage devices 316 are components of the hardware fixed storage system 216 (Fig. 2). In alternative embodiments, the active archive 314-1 is a component of the archiving system appliance 210 (Fig. 2).

The archival management system 310-1 may also provide an intelligent storage capability. Each type of data sent to the network storage system 302 may have different requirements and controls. For example, certain organizations, such as the SEC, Food and Drug Administration (FDA), European Union, etc., have different requirements for how certain data is archived. The SEC may require financial information to by kept for seven (7) years while the FDA may require clinical trial data to be kept for thirty (30) years. Data storage requirements may include immutability (the requirement that data not be overwritten), encryption, a predetermined data format, retention period (how long the data will remain archived), etc. The archival management system 310-1 can apply controls to different portions of the RDA 232-2 archive according to user-established data storage requirements. In one embodiment, the archival management system 310-1 creates logical partitions in the archive that span one or more removable disk drives 102-3. All data to be stored in any one partition can have the same requirements and controls. Thus, requirements for data storage are applied to different drive ports 110-2 (Fig. 2) in the modular drive bay 212 (Fig. 2) and to the removable disk drives 102-2 (Fig. 2) stored in those drive ports 110-2 (Fig. 2). If a removable disk drive 102-2 (Fig. 2) is replaced, the same storage requirements, in embodiments, are applied to the replacement removable disk drive 102-3 (Fig. 2) because of its location in the drive port 110-2 (Fig. 2). As such, the archival management system 310-1 can individually maintain separate sets of data using different controls, even in different removable disk drives 102-2 (Fig. 2).

The network storage system 302 may also comprise a database 318-1 in communication with the archival management system 310-1. The database 318-1 is, in embodiments, a memory for storing information related to the data being archived. The database 318-1 may include HDDs, ROM, RAM or other memory either internal to the network storage system 302 and/or the archival management system 310-1 or separate as a discrete component addressable by the archival management system 310-1. The information stored in the database 318-1, in embodiments, includes one or more of, but is not limited to, data identification, application server identification, time of storage, identification of the removable disk drive of where the data was stored, data format, encryption keys, etc.

The network 304, in embodiments, connects, couples, or otherwise allows communications between one or more other systems and the network storage system 302. For example, the application server 306 is connected to the network storage system 302 via the network 304. The application server 306 may be a software application, for example, an email software program, a hardware device, or other network component or system. The application server 306, in embodiments, communicates with a memory that functions as the application server's primary storage 308. The primary storage 308 is, in embodiments, a HDD, RAM, ROM, or other memory either local to the application server 306 or in a separate location that is addressable.

In embodiments, the application server 306 stores information to the primary storage 308. After some predetermined event, such as the expiration of some period of time, the application server 306 sends data to the network storage system 302 to archive the data. The application server 306 may send the data by any network protocol, such as TCP/IP, HTTP, etc., over the network 304 to the network storage system 302. The data is received at the archival management system 310-1. The archival management system 310-1, in embodiments, sends the data to one or both of the active archive 314-1 and/or the archiving system 312-1 to be archived.

Embodiments of an archival management system 310-2 and an archiving system 312-2, including one or more components or modules, are shown in Fig. 4. In embodiments, the archival management system 310-2 comprises one or more of a protection module 402, an active archive management module 404, and an audit module 405. In embodiments, the protection module 402 protects access to the archiving system 312-2 by applications, application servers, or other component. For example, the protection module 402 prohibits a user from accessing the archiving system 312-2 if the archiving system 312-2 is a closed system. Thus, the protection module 402 may authenticate a system, determine access rights of a system, perform decryption of data, and other processes.

The active archive management module 404, in embodiments, manages data written to and read from the active archive 314-2. In embodiments, the active archive management module 404 determines if archival data should be written to the active archive 314-2 based on information provided by the application server or on information stored in the database 318-2. In further embodiments, the active archive management module 404 determines when data in the active archive 314-2 is removed from the active archive 314-2. According to information in the database 318-2, one or more items of data may only reside in the active archive 314-2 for a predetermined period of time, for example, three months. After the expiration of the predetermined period of time, the data is removed from the active archive 314-2 leaving only the copy stored in the removable disk drives for retrieval.

The audit module 405, in embodiments, stores data about archival data stored in the archiving system 312-2. In embodiments, the audit module 405 records information, for example, the application server that sent the data, when the data was received, the type of data, where in the archiving system 312-2 the data is stored, the period of time the data will be stored in the active archive 314-2, etc. The audit module 405 can provide a "chain of custody" for the archived data by storing the information in the database 318-2.

The archiving system 312-2, in embodiments, includes one or more of an authenticity module 406, an indexing module 408 and/or a placement/media management module 410. In embodiments, the authenticity module 406 determines if a removable disk drive is safe to connect with the archiving system 312-2. For example, the authenticity module 406 may complete an authentication process, such as, pretty good privacy (PGP), a public-key encryption process, or other authentication process, using one or more keys to verify that the inserted removable disk drive has access to the archiving system 312-2.

The indexing module 408, in embodiments, creates logical partitions in the RDA to provide storage areas for different data. For example, the indexing module 408 selects one or more removable disk drives to form one or more "drives". "Drive A:\" 412 may comprise one or more removable disk drives, while "Drive B:\" 414 and "Drive C:\" 416 may also include one or more removable disk drives. In embodiments, each drive is a logical partition of the RDA. There may be fewer than three partitions of the RDA, as shown in Fig. 4, or more than three partitions of the RDA as represented by the ellipses 418. In embodiments, each drive stores only a predetermined type of data that relates to one or more application servers. For example, "Drive A:\" 412 stores email data, while "Drive B:\" 414 stores Health Insurance Portability and Accountability Act (HIPAA) data. The application servers can view the logical partitions in the RDA and, as such, views the RDA as a virtual archiving system with a separate, independent drive inside the RDA for the application server. One application server may only access the one or more drives related to the data the application server archives and may not access other drives not associated with the data the application server archives. In alternative embodiments, the active archive management module 404 also partitions the active archive 314-2 in a similar manner.

In further embodiments, the indexing module 408 provides controls for each drive. How data is archived for one type of data may be different from how a second type of data is archived. For example, an organization (e.g., the SEC) may require email to be stored for seven (7) years while the FDA may require clinical trial data to be stored for thirty (30) years. The indexing module 408 can manage each drive differently to meet the requirements for the data. For example, the indexing module 408 may store email on drive A:\ 412 for seven years and store HIPAA data on drive B:\ 414 for thirty years. The indexing module 408, in embodiments, stores information about which removable disk drives comprise the separate partitions and enforces the controls on those removable disk drives.
Other controls enforced by the indexing module 408 may include the format of data stored on a drive, whether data is encrypted on the removable disk drive, how data is erased on a removable disk drive, etc.

In embodiments, the placement/media management module 410 manages the removable disk drives in the RDA. For example, the placement/media management module 410 determines when cartridges need replacing because the removable disk drive is at or near capacity. In embodiments, the placement/media management module 410 also separately addresses the removable disk drives and provides the addressing information to the indexing module 408 for storing data in the correct partition.

Some organizations require that archived data is immutable, that is, the data cannot be overwritten or deleted for a period of time. To ensure data stored in the RDA is immutable, the placement/media management module 410, in embodiments, enforces a Write Once Read Many (WORM) process on the removable disk drives storing immutable data. The WORM process may comprise one or more functions that write data to the removable disk drive in a manner that prevents it from being overwritten, e.g., write protection, sequential writing to disk, etc. Data for a logical partition may require WORM enforcement according to the indexing module 408. The placement/media management module 410 can determine what disks are associated with the logical partition needing WORM enforcement and enforce the WORM process on the removable disk drives associated with the logical partition.

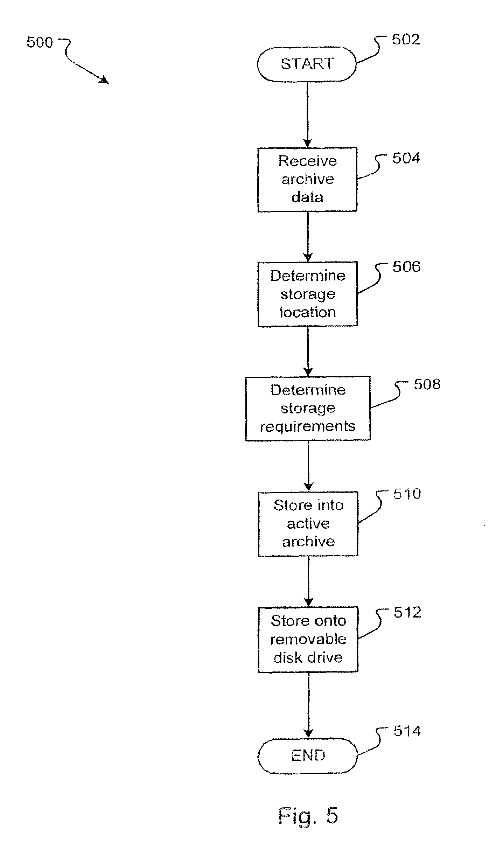

A method 500 for storing data to an archive is shown in Fig. 5. In embodiments, the method 500 generally begins with a START operation 502 and terminates with an END operation 514. The steps shown in the method 500 may be executed in a computer system as a set of computer executable instructions. While a logical order is shown in Fig. 5, the steps shown or described can, in some circumstances, be executed in a different order than presented herein.

A receive operation 504 receives archival data. In embodiments, an application server 206 (Fig. 2) stores data in a primary storage 228 (Fig. 2). After some predetermined event, the application server 206 (Fig. 2) sends data to a network storage system 202 (Fig. 2) to be archived. For example, a separate program in the application server 206 (Fig. 2) executes and determines all data that has not been accessed for more that a predetermined period of time, e.g., seven (7) years, is to be archived. The separate program identifies and bundles the data for archiving. In another example, an application, e.g., an email application, archives all data periodically, e.g., every month or every time a user logs-off. The application bundles the data and sends it to the network storage system 202 (Fig. 2).

In embodiments, an archival management system 310-1 (Fig. 3) virtualizes the RDA 232-1 (Fig. 2) into one or more logical partitions and exposes the RDA 232-1 (Fig. 2) to the application server 206 (Fig. 2) as one or more drives. The application server 206 (Fig. 2) can send the archival data to the network storage system 202 (Fig. 2) by targeting storage to a particular drive. For example, the application server 206 (Fig. 2) targets storage if the data is to be stored into "drive A:\". The archival management system 310-1 (Fig. 3) receives the data targeted for the drive.

Determine operation 506 determines the storage location for the received data. The archival management system 310-1, in embodiments, determines if the data should be sent to the active archive 314-1. If the data should be sent to the active archive 314-1, the archival management system 310-1 sends the received data to both the active archive 314-1 and the archiving system 312-1 (Fig. 3). The active archive 314-1 (Fig. 3) can then determine where in the fixed storage 316 (Fig. 3) the received data may be stored. Likewise, the archiving system 312-1 (Fig. 3) can determine where in the RDA 232-1 (Fig. 2) the received data is to be stored. In embodiments, the indexing module 408 (Fig. 4) resolves to which removable disk drive(s) the data will be stored based on the association between the targeted drive and the removable disk drives.

Determine operation 508 determines the storage requirements for the received data. As explained in conjunction with Fig. 4, each logical partition in the RDA 232-1 (Fig. 2) may be related to a predetermined type of data. Each type of data, and thus, the logical partition, can have a predetermined set of storage requirements. The storage requirements can include one or more of, but are not limited to, immutability, encryption, retention periods, etc. For example, the SEC may require email to be stored for three (3) months. An indexing module 408 (Fig. 4) can determine by the type of data or from the targeted drive provided by the application server 206 (Fig. 2) that the data is email data. The indexing module 408 (Fig. 4) can then set a flag or store metadata information that the archived email data stored in the RDA 232-1 (Fig. 2) must remain for three (3) months. In embodiments, the archival management system 310-1 (Fig. 3) stores the information about the retention of the data into the database 318-1 (Fig. 3).

Store operation 510 stores the archival data into the active archive 314-1 (Fig. 3). In embodiments, if determine operation 506 determines that the archival data is to be stored in the active archive 314-1 (Fig. 3), then store operation 510 stores the data in the active archive 314-1 (Fig. 3). The archival management system 310-1 (Fig. 3), in embodiments, sends the archival data to the active archive 314-1 (Fig. 3), and the active archive 314-1 (Fig. 3) stores the archival data into the fixed storage 316 (Fig. 3). In one embodiment, the active archive 314-1 (Fig. 3) writes the data to a memory location in the RAID comprising the fixed storage 316 (Fig. 3).

Store operation 512 stores the archival data into at least one removable disk drive 102-1 (Fig. 1). In embodiments, the archiving system 312-1 (Fig. 3) writes data to one or more removable disk drives 102-3 (Fig. 3) in a modular drive bay 212 (Fig. 2). The placement/media management module 410 (Fig. 4), in embodiments, identifies, from the targeted drive, the one or more removable disk drives 102-3 (Fig. 3) to which the archival data will be written. The placement/media management module 410 (Fig. 4) then can write the archival data to the one or more removable disk drives 102-3 (Fig. 3) by sending the archival data to the machine address of the HDD in the embedded memory 104 (Fig. 1).

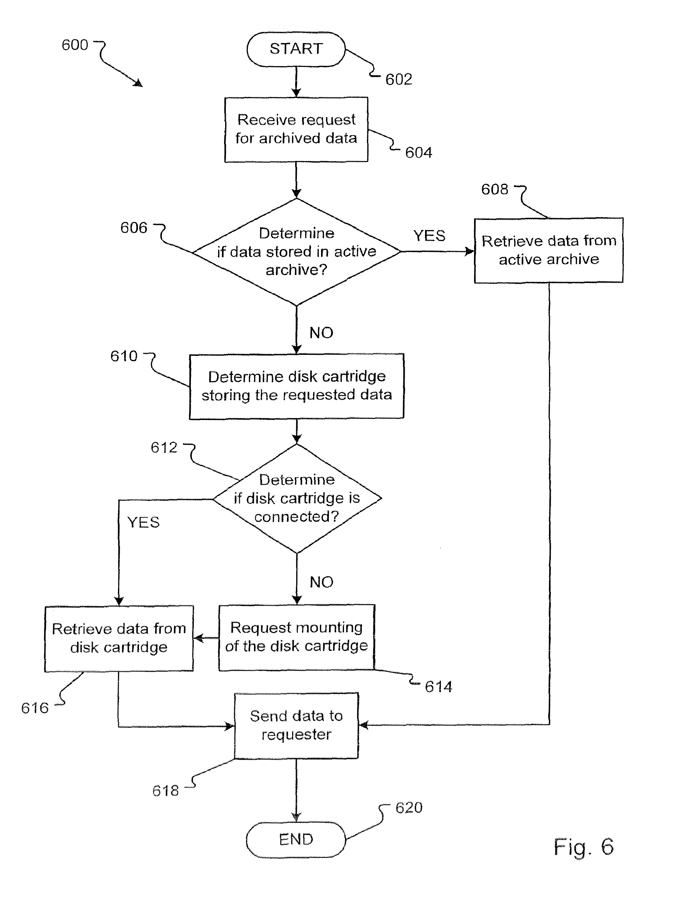

A method 600 for retrieving archived data is shown in Fig. 6. In embodiments, the method 600 generally begins with a START operation 602 and terminates with an END operation 620. The steps shown in the method 600 may be executed in a computer system as a set of computer executable instructions. While a logical order is shown in Fig. 6, the steps shown or described can, in some circumstances, be executed in a different order than presented herein.

Receive operation 604 receives a request for archived data. In embodiments, an application server 206 (Fig. 2) requests data that the application server 206 (Fig. 2) had previously archived. In one embodiment, the application server 206 (Fig. 2) identifies the data and target drive where the data was stored. The archival management system 310-1 (Fig. 3) determines from the information provided and by accessing information in the database 318-1 (Fig. 3) where the requested data is stored. Determine operation 606 determines if the requested data is archived in the active archive 314-1 (Fig. 3). In embodiments, the archival management system 310-1 (Fig. 3) determines from information in the database 318-1 (Fig. 3) if the data is still stored in the active archive 314-1 (Fig. 3). If the data is stored in the active archive 314-1 (Fig. 3), the method flows YES to retrieve operation 608. If the data is no longer stored in the active archive 314-1 (Fig. 3), the method flows NO to determine operation 610.

Retrieve operation 608 retrieves the requested data from the active archive 314-1 (Fig. 3). In embodiments, the active archive 314-1 (Fig. 3) reads the requested data from one or more memory locations in the fixed storage 316 (Fig. 3).

Determine operation 610 determines which removable disk drive stores the requested data. The requested data may have been stored in a logical partition. One or more removable disk drives 102-3 (Fig. 3) may correspond to the logical partition. The removable disk drives 102-3 (Fig. 3) for the targeted logical partition are determined. In other embodiments, the archival management system 310-1 (Fig. 3) determines from the identifying information provided by the application server which removable disk drive stores the information. For example, a data identification code stored in the database 318-1 (Fig. 3) is located and an associated removable disk drive identification code is determined.

Determine operation 612 determines if the identified removable disk drive is connected or available. The removable disk drive storing the requested information may have been removed from the drive port and stored in another physical location. If the removable disk drive is not available, the process flows NO to request operation 614. Request operation 614 requests the removable disk drive be mounted or connected to the archiving system. In one embodiment, a message is sent to an administrator of the archiving system to insert the particular removable disk drive, identified by its identification code, into a particular docking port of the modular drive bay. After the mounting, the archiving system can read the requested data. If the removable disk drive is connected, the process flows YES to retrieve operation 616.

Retrieve operation 616 retrieves the requested data from the removable disk drive. In embodiments, the placement/media management module 410 (Fig. 4) reads the requested data from the removable disk drive. Send operation 618 sends the data to the requester. In embodiments, the archiving system appliance 210 (Fig. 2) packages the data and sends the data over the network 204 (Fig. 2) to the requesting application server.

In light of the above description, a number of advantages of the present disclosure are readily apparent. For example, the removable disk drives provide almost limitless storage capacity without adding new supporting components or devices. New removable disk drives can be inserted into the modular drive bay as more storage capacity is required. Further, if the storage capacity is nearing full usage, one or more of the removable disk drives can be replaced. The removable disk drives provide faster read and write operations because the disks can be random access devices. Further, the embodiments provide an intelligent archiving system that can enforce data controls independently and according to the needs of the data being stored.

### THE FOLLOWING STATEMENTS DESCRIBE

### SOME ASPECTS OF THE INVENTION

According to a first embodiment of the present invention, there is provided a removable disk system for archiving data, the removable disk system comprising:
one or more removable disk drives, the one or more removable disk drives operable to store archival data, each removable disk drive comprising:
   a data cartridge case;
   a connector;
   an embedded memory, the embedded memory physically attached to the data cartridge case, the embedded memory electrically connected to the connector, the embedded memory operable to store archival data; and
   one or more drive ports, each drive port including a data cartridge connector which mates with the connector to communicate with the embedded memory, the one or more drive ports in communication with one or more application servers, the one or more drive ports receiving the archival data from the one or more application servers and sending the archival data to the embedded memory for storage, wherein each drive port is separately addressable to customize control for each removable disk drive.

The disk system may include one or more of the following:-

The embedded memory may eg. comprise one of a group consisting of a hard disk drive, flash memory, a solid state disk, or a solid state drive.

The removable disk system may eg. further comprise an archiving system appliance, the archiving system appliance in communication with one or more application servers to receive the archival data, the archiving system appliance determining where to store the archival data, the archiving system appliance determining the storage requirements of the archival data.

The removable disk system may eg. further comprise a fixed storage in communication with the archiving system appliance, the fixed storage providing temporary storage of one or more items of archival data.

The fixed storage may eg. be RAID protected.

The removable disk system may eg. further comprise one or more modular drive bays comprising two or more drive ports.

The removable disk system may eg. further comprise:
an archiving system in communication with the removable disk drives, the archiving system managing storage of the archival data; and
an archival management system in communication with the archiving system, the archival management system receiving the archival data from one or more application servers, the archival management system determining where to store the archival data, the archival management system determining storage requirements for the archival data.

The archival management system may eg. store information about the archival data in a database, the information including one of a group consisting of an immutability flag, an identifier for a removable disk drive where stored, and a data identification code.

The archival management system may eg. comprise:
a protection module, the protection module determining access rights of one or more application servers to the network storage system;
an active archive management module in communication with an active archive, the active archive management module determining if archival data is to be stored in the active archive, the active archive management module retrieving and sending the archival data to the active archive; and
an audit module in communication with a database, the auditing module writing information about the archival data to the database.

The archiving system may eg. comprise:
an authenticity module in communication with one or more removable disk drives, the authenticity module authenticating the one or more removable disk drives;
an indexing module in communication with one or more removable disk drives, the indexing module determining where to store the archival data and providing logical partitions for the one or more removable disk drive; and
a placement/media management module in communication with one or more removable disk drives, the placement/media management module reading and writing archival data to the one or more removable disk drives.

The embedded memory may eg. be physically integrated with the connector.

According to a second embodiment of the invention, there is provided an archiving system for archiving data, the archiving system comprising:
a network;
one or more application servers in communication with the network, the application servers requiring archival of data; and
a network storage system in communication with the network to receive archival data from the one or more application servers via the network, the network storage system comprising:
   one or more drive ports; and
   one or more removable disk drives connected with the one or more drive ports, the one or more removable disk drives storing the archival data received from the one or more application servers.

The archiving system may include one or more of the following:-

The removable disk drive may eg. comprise one of a group consisting of a hard disk drive, solid state disk, solid state drive, or flash memory.

The archiving system may eg. further comprise:
an archiving system appliance, the archiving system appliance in communication with one or more application servers to receive the archival data, the archiving system appliance determining where to store the archival data, the archiving system appliance determining the storage requirements of the archival data;
a fixed storage in communication with the archiving system appliance, the fixed storage providing temporary storage of one or more items of archival data.

The archiving system may eg. further comprise:
an archiving system in communication with the removable disk drives, the archiving system managing storage of the archival data; and
an archival management system in communication with the archiving system, the archival management system receiving the archival data from one or more application servers, the archival management system determining where to store the archival data, the archival management system determining storage requirements for the archival data, the archival management system storing information about the archival data in a database, the information including one of a group consisting of an immutability flag, an identifier for a removable disk drive where the archival data is stored, and a data identification code.

The archival management system comprises:
a protection module, the protection module determining access rights of one or more application servers to the network storage system;
an active archive management module in communication with an active archive, the active archive management module determining if archival data is to be stored in the active archive, the active archive management module retrieving and sending the archival data to the active archive; and
an audit module in communication with a database, the auditing module writing information about the archival data to the database.

The archiving system may eg. comprise:
an authenticity module in communication with one or more removable disk drives, the authenticity module authenticating the one or more removable disk drives;
an indexing module in communication with one or more removable disk drives, the indexing module determining where to store the archival data and providing logical partitions for the one or more removable disk drives; and
a placement/media management module in communication with one or more removable disk drives, the placement/media management module reading and writing archival data to the one or more removable disk drives.

According to a third embodiment of the invention, there is provided a method, executable in a computer system, for storing archival data in a network storage device, the method comprising:
receiving archival data from one or more application servers;
determining the storage location in a removable disk array for the received data; and
storing the received data in one or more removable disk drives.

The method may include one or more of the following:-

The method may eg. further comprise:
determining if the received data is to be stored in an active archive;
if the received data is to be stored in the active archive, storing the received data in the active archive and the removable disk array; and
if the received data is not to be stored in the active archive, storing the received data only in the removable disk array.

The method may eg. further comprise determining the storage requirements for the received data, wherein the storage requirements is one of a group comprising immutability, retention period, encryption, and data format.

The method may eg. further comprise:
receiving a request for the stored archival data;
determining if the stored archival data is in an active archive;
if the stored archival data is in the active archive, reading the stored archival data from the active archive;
if the stored archival data is not in the active archive, determining the one or more removable disk drives that store the stored archival data;
determining if the one or more removable disk drives that store the stored archival data is connected;
if the one or more removable disk drives that store the stored archival data are not connected, requesting that the one or more removable disk drives that store the stored archival data be mounted;
if the one or more removable disk drives that store the stored archival data is connected, retrieving the stored archival data from the one or more removable disk drives that store the stored archival data; and
sending the retrieved data.

While the principles of the disclosure have been described above in connection with specific apparatuses and methods, it is to be clearly understood that this description is made only by way of example and not as limitation on the scope of the disclosure.

## Claims

1. A removable disk system for archiving data, the removable disk system comprising:
one or more removable disk drives, the one or more removable disk drives operable to store archival data, each removable disk drive comprising:
a data cartridge case;
a connector;
an embedded memory, the embedded memory physically attached to the data cartridge case, the embedded memory electrically connected to the connector, the embedded memory operable to store archival data; and
one or more drive ports, each drive port including a data cartridge connector which mates with the connector to communicate with the embedded memory, the one or more drive ports in communication with one or more application servers, the one or more drive ports receiving the archival data from the one or more application servers and sending the archival data to the embedded memory for storage, wherein each drive port is separately addressable to customize control for each removable disk drive.

2. A removable disk system as claimed in claim 1, wherein the embedded memory comprises one of a group consisting of a hard disk drive, flash memory, a solid state disk, or a solid state drive.

3. A removable disk system as claimed in claim 1 or 2, further comprising an archiving system appliance, the archiving system appliance in communication with one or more application servers to receive the archival data, the archiving system appliance determining where to store the archival data, the archiving system appliance determining the storage requirements of the archival data, and
optionally further comprising a fixed storage in communication with the archiving system appliance, the fixed storage (optionally RAID protected) providing temporary storage of one or more items of archival data.

4. A removable disk system as claimed in any one of the preceding claims, further comprising one or more modular drive bays comprising two or more drive ports.

5. A removable disk system as claimed in any one of the preceding claims, further comprising:
an archiving system in communication with the removable disk drives, the archiving system managing storage of the archival data; and
an archival management system in communication with the archiving system, the archival management system receiving the archival data from one or more application servers, the archival management system determining where to store the archival data, the archival management system determining storage requirements for the archival data.

6. A removable disk system as claimed in claim 5, including one or more of the following:
(a) wherein the archival management system stores information about the archival data in a database, the information including one of a group consisting of an immutability flag, an identifier for a removable disk drive where stored, and a data identification code;
(b) wherein the archival management system comprises:
a protection module, the protection module determining access rights of one or more application servers to the network storage system;
an active archive management module in communication with an active archive, the active archive management module determining if archival data is to be stored in the active archive, the active archive management module retrieving and sending the archival data to the active archive; and
an audit module in communication with a database, the auditing module writing information about the archival data to the database;
(c) wherein the archiving system comprises:
an authenticity module in communication with one or more removable disk drives, the authenticity module authenticating the one or more removable disk drives;
an indexing module in communication with one or more removable disk drives, the indexing module determining where to store the archival data and providing logical partitions for the one or more removable disk drive; and
a placement/media management module in communication with one or more removable disk drives, the placement/media management module reading and writing archival data to the one or more removable disk drives.

7. A removable disk system as claimed in any one of the preceding claims, wherein the embedded memory is physically integrated with the connector.

8. An archiving system for archiving data, the archiving system comprising:
a network;
one or more application servers in communication with the network, the application servers requiring archival of data; and
a network storage system in communication with the network to receive archival data from the one or more application servers via the network, the network storage system comprising:
one or more drive ports; and
one or more removable disk drives connected with the one or more drive ports, the one or more removable disk drives storing the archival data received from the one or more application servers.

9. An archiving system as claimed in claim 8, wherein the removable disk drive comprises one of a group consisting of a hard disk drive, solid state disk, solid state drive, or flash memory.

10. An archiving system as claimed in claim 8 or 9, further comprising:
an archiving system appliance, the archiving system appliance in communication with one or more application servers to receive the archival data, the archiving system appliance determining where to store the archival data, the archiving system appliance determining the storage requirements of the archival data;
a fixed storage in communication with the archiving system appliance, the fixed storage providing temporary storage of one or more items of archival data.

11. An archiving system as claimed in claim 8, 9 or 10, further comprising:
an archiving system in communication with the removable disk drives, the archiving system managing storage of the archival data; and
an archival management system in communication with the archiving system, the archival management system receiving the archival data from one or more application servers, the archival management system determining where to store the archival data, the archival management system determining storage requirements for the archival data, the archival management system storing information about the archival data in a database, the information including one of a group consisting of an immutability flag, an identifier for a removable disk drive where the archival data is stored, and a data identification code.

12. An archiving system as claimed in claim 11, wherein the archival management system comprises:
a protection module, the protection module determining access rights of one or more application servers to the network storage system;
an active archive management module in communication with an active archive, the active archive management module determining if archival data is to be stored in the active archive, the active archive management module retrieving and sending the archival data to the active archive; and
an audit module in communication with a database, the auditing module writing information about the archival data to the database.

13. An archiving system as claimed in claim 11 or 12, wherein the archiving system comprises:
an authenticity module in communication with one or more removable disk drives, the authenticity module authenticating the one or more removable disk drives;
an indexing module in communication with one or more removable disk drives, the indexing module determining where to store the archival data and providing logical partitions for the one or more removable disk drives; and
a placement/media management module in communication with one or more removable disk drives, the placement/media management module reading and writing archival data to the one or more removable disk drives.

14. A method, executable in a computer system, for storing archival data in a network storage device, the method comprising:
receiving archival data from one or more application servers;
determining the storage location in a removable disk array for the received data; and
storing the received data in one or more removable disk drives.

15. A method as claimed in claim 14, further comprising one or more of the following:-
(a) determining if the received data is to be stored in an active archive;
if the received data is to be stored in the active archive, storing the received data in the active archive and the removable disk array; and
if the received data is not to be stored in the active archive, storing the received data only in the removable disk array.
(b) determining the storage requirements for the received data, wherein the storage requirements is one of a group comprising immutability, retention period, encryption, and data format.
(c) receiving a request for the stored archival data;
determining if the stored archival data is in an active archive;
if the stored archival data is in the active archive, reading the stored archival data from the active archive;
if the stored archival data is not in the active archive, determining the one or more removable disk drives that store the stored archival data;
determining if the one or more removable disk drives that store the stored archival data is connected;
if the one or more removable disk drives that store the stored archival data are not connected, requesting that the one or more removable disk drives that store the stored archival data be mounted;
if the one or more removable disk drives that store the stored archival data is connected, retrieving the stored archival data from the one or more removable disk drives that store the stored archival data; and
sending the retrieved data.
